# EUROPÄISCHE PATENTSCHRIFT

(11) **EP 1 060 553 B1**
(45) Veröffentlichungstag und Bekanntmachung des Hinweises auf die Patenterteilung: **22.05.2002**
(21) Anmeldenummer: 99904686.5
(22) Anmeldetag: 03.03.1999
(51) Int. Cl.: H02H 9/02

(54) **ANORDNUNG SOWIE VERFAHREN ZUR STROMBEGRENZUNG MIT EINER SUPRALEITENDEN TRANSFORMATORANORDNUNG IN EINEM ELEKTRISCHEN SCHALTKREIS**
CURRENT-LIMITING ARRANGEMENT WITH A SUPERCONDUCTIVE TRANSFORMER ARRANGEMENT IN AN ELECTRIC CIRCUIT
DISPOSITIF ET PROCEDE DE LIMITATION D'INTENSITE DOTE D'UN AGENCEMENT DE TRANSFORMATEUR SUPRACONDUCTEUR DANS UN CIRCUIT ELECTRIQUE

(30) Priorität: 05.03.1998 DE 19809314
(43) Veröffentlichungstag der Anmeldung: 20.12.2000
(73) Patentinhaber: ABB RESEARCH LTD., 8050 Zürich (CH)
(72) Erfinder: PAUL, Willi, CH-5430 Wettingen (CH); BONMANN, Dietrich, D-53340 Meckenheim (DE)
(74) Vertreter: ABB Patent Attorneys
(86) Internationale Anmeldenummer: CH9900100
(87) Internationale Veröffentlichungsnummer: WO9945622

(56) Entgegenhaltungen:
- FR-A- 2 647 590
- US-A- 4 336 561
- PATENT ABSTRACTS OF JAPAN vol. 013, no. 213 (E-759), 18. Mai 1989 & JP 01 026327 A (TOSHIBA CORP), 27. Januar 1989

## Beschreibung

### Technisches Gebiet

Die Erfindung bezieht sich auf eine Anordnung sowie ein Verfahren zur Strombegrenzung mit einer supraleitenden Transformatoranordnung in einem elektrischen Schaltkreis.

### Stand der Technik

Vorrichtungen zur Strombegrenzung, insbesondere in elektrischen Schaltkreisen, in denen strom- bzw. spannungsempfindliche Bauelemente, wie Halbleiterbauelemente, integriert sind, gehen beispielsweise aus den deutschen Druckschriften DE 44 18 050 A1 sowie DE 44 34 819 C1 hervor. Das den supraleitenden Strombegrenzem zugrundeliegende Wirkprinzip basiert auf dem Überschreiten der kritischen Stromstärke I_{c} des in dem elektrischen Schaltkreis integrierten Supraleiters, wodurch dieser einen normal leitenden Zustand einnimmt, seinen Widerstand entscheidend erhöht und den Kurzschlußstrom auf einen unkritischen Wert begrenzt. Im Falle der DE 44 18 050 A1 erfolgt dies über die Drosselspule 3, deren lmpedanz aufgrund des nicht mehr abgeschirmten Magnetfeldes des Transformatorkerns sprunghaft ansteigt.

Der Vorteil der Verwendung von Supraleitern als Strombegrenzer liegt darin, daß nach Beseitigung des Kurzschlußstromes und wieder Erreichen des supraleitenden Zustandes der Normalbetrieb der elektrischen Schaltung wieder aufgenommen werden kann, ohne dass dabei weitere Maßnahmen, wie beispielsweise Zurückstellen von Schutzschaltern in ihre Ausgangsstellung oder Auswechseln von durchgebrannten Sicherungen, getroffen werden müssen.

Für gewöhnlich befinden sich die supraleitenden Bauelemente in einem Kryostaten, der mit einem Kühlmedium befüllt ist, beispielsweise flüssiger Stickstoff, um das supraleitende Material unterhalb seiner kritischen Temperatur zu halten. Unmittelbar nach Auftreten eines Kurzschlußstromes wird der über die kritische Temperatur erwärmte Supraleiter durch das Kühlmedium wieder abgekühlt. Der Abkühlvorgang dauert jedoch aufgrund physikalisch vorgegebener Grenzen hinsichtlich des Wärmeüberganges zwischen Supraleiter und Kühlmedium eine gewisse Mindestzeitdauer, innerhalb der die Stromversorgung des elektrischen Schaltkreises unterbrochen ist. Da die Zeitdauer von Kurzschlußstromfällen üblicherweise um einige Größenordnungen kürzer ist als die Zeitspanne für den Abkühlvorgang, unterbrechen die bekannten Strombegrenzeranordnungen mit Supraleiter die Stromversorgung für einen zu schützenden elektrischen Schaltkreis länger als es für die ausschließliche Vermeidung von Spannungs- bzw. Stromspitzen in Kurzschlußfällen nötig ist.

In der Patentschrift US 4,336,561 ist ein supraleitender Transformator offenbart, welcher zusätzlich eine strombegrenzende Eigenschaft aufweist. Sowohl primär wie auch sekundärseitig sind jeweils parallelgeschaltete Haupt- und Nebenwicklungen vorgesehen. Die Hauptwicklungen sind so ausgelegt, dass sie im Dauerbetrieb den Nennstrom ohne resistive Verluste leiten. Die beiden Nebenwicklungen sind nicht perfekt gekoppelt, d.h. sie zeichnen sich durch eine substantielle Streu-lmpedanz ähnlich einer freistehenden Drosselspule aus. Aus diesem Grunde fliesst durch die Nebenwicklungen im Dauerbetrieb praktisch kein Strom. Wird nun der Nennstrom im Kurzschlussfall überschritten, treten sowohl die primär- wie auch die sekundärseitige Hauptwicklung in einen resistiven Zustand über und der Stromfluss kommutiert zumindest teilweise auf die Nebenwicklungen. Deren Streuimpedanz stellt sich nun einem unbegrenzten Stromanstieg entgegen. Ein Schalter kann im Kurzschlussfall die Hauptwicklungen unterbrechen um diese vor einer Überbelastung zu schützen.

Die Nebenwicklungen sind so dimensioniert, dass sie unter allen Umständen supraleitend bleiben, d.h. ihr Leiterquerschnitt ist entsprechend auf ein Vielfaches des Nennstromes ausgelegt. Dies bedingt vor allem für die primärseitige Nebenwicklung einen unnötigen Materialaufwand.

### Darstellung der Erfindung

Der Erfindung liegt die Aufgabe zugrunde, eine Strombegrenzungsanordnung mit einer supraleitenden Transformatoranordnung in einem elektrischen Schaltkreis anzugeben, welche sich durch einen minimalen Einsatz von Supraleitermaterial auszeichnet und bei welcher die Zeitdauer der Strombegrenzung ausschließlich auf das Auftreten des Kurzschlußstromes beschränkt ist und nicht vom Abkühlverhalten des supraleitenden Materials unterhalb der kritischen Temperatur abhängt. Insbesondere soll eine Strombegrenzeranordnung angegeben werden, die möglichst unterbrechungsfrei eine Verbraucherschaltung mit Energie versorgt.

Die Lösung der der Erfindung zugrundeliegenden Aufgabe ist in den Ansprüchen 1 und 3 sowie in den Ansprüchen 7 und 8 angegeben. Ansprüche 1 und 3 richten sich auf eine erfindungsgemäße Anordnung, Ansprüche 7 und 8 auf erfindungsgemäße Verfahren zum Betreiben der Strombegrenzerschaltung. Den Erfindungsgedanken vorteilhaft weiterbildende Merkmale sind Gegenstand der Unteransprüche.

Erfindungsgemäß ist die Anordnung zur Strombegrenzung mit einer supraleitenden Transformatoranordnung in einem elektrischen Schaltkreis derart weitergebildet, daß die supraleitende Transformatoranordnung wenigstens zwei getrennte, supraleitende Transformator-Primärwicklungen aufweist, welche sich getrennt voneinander in den elektrischen Schaltkreis zu- oder abschalten lassen. Vorteilhafterweise ist die kritische Stromstärke I_{C}(P) bei beiden Primärwicklungen auf den Primär-Nennstrom I_{N}(P) ausgelegt, d.h. beide Primärwicklungen weisen ähnliche strombegrenzende Eigenschaften auf.

Eine erfindungsgemäße Weiterbildung der supraleitenden Transformatoranordnungist dadurch gekennzeichnet, daß die supraleitende Transformatoranordnung wenigstens zwei getrennte supraleitende Transformator-Paarwicklungen aufweist, die jeweils aus einer Primär- und einer Sekundärwicklung bestehen. Ferner ist eine Schaltereinheit vorgesehen, die die Transformator-Paarwicklungen getrennt voneinander in den elektrischen Schaltkreis zu- oder abschaltet.

Die Erfindungsidee ist darin zu sehen, daß ein vor Kurzschlußströmen zu schützender elektrischer Schaltkreis mit der Primär- und Sekundärseite eines supraleitenden Transformators verbunden ist, die sich beim Normalbetrieb der elektrischen Schaltung in einem supraleitenden Zustand befinden. Bei Auftreten eines Kurzschlußstromfalles wird der kritische Strom innerhalb der supraleitenden Wicklungen überschritten, wodurch es zu einer spontanen Erwärmung des Materials kommt und der supraleitende Zustand in sich zusammenbricht. Durch den Übergang zur Normalleitung kann kurzzeitig der Kurzschlußstrom begrenzt werden. Zur weitgehend unterbrechungsfreien Stromversorgung der elektrischen Schaltung schaltet nach Beseitigung des Kurzschlußstromfalles die Schaltereinheit von der normalleitenden Primärwicklung respektive der normalleitenden Transformator-Paarwicklung auf die zweite, im supraleitenden Zustand befindliche Primärwicklung respektive Transformator-Paarwicklung um, so daß der elektrische Schaltkreis ohne Unterbrechung mit elektrischer Energie weiter versorgt werden kann. Die normalleitende Primärwicklung respektive die normalleitende Transformator-Paarwicklung kann sich jetzt ohne Last wieder auf die Temperatur des Kühlmediums abkühlen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
Fig. 1 Ein elektrischer Schaltkreis mit einer Strombegrenzungsanordnung gemäss einer ersten Ausführungsform der Erfindung;
Fig. 2 Ein elektrischer Schaltkreis mit einer Strombegrenzungsanordnung gemäss einer zweiten Ausführungsform der Erfindung, und
Fig. 3 eine schematisierte Darstellung der erfindungsgemäßen Strombegrenzungsanordnung gemäss der zweiten Ausführungsform;

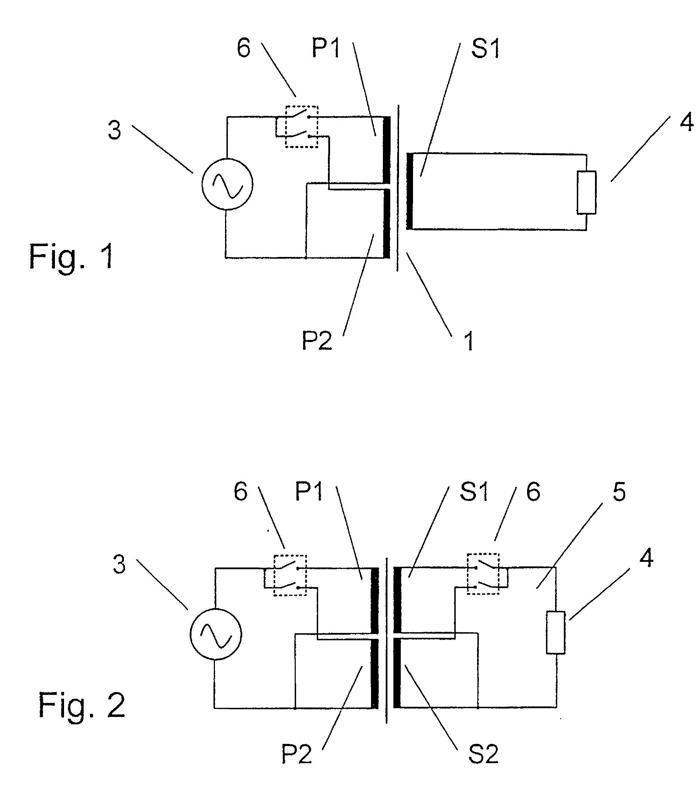

In Fig. 1 sind ein Transformatorkern 1, zwei parallele Transformator-Primärwicklungen P1, P2 sowie eine Transformator-Sekundärwicklung S1 dargestellt. Alle Wicklungen bestehen aus supraleitendem Material oder enthalten zumindest einen signifikanten Anteil einer supraleitenden Komponente. Einseitig sind die Primärwicklungen P1 und P2 elektrisch miteinander verbunden. Mit ihren anderen Anschlußkontakten sind die Primärwicklungen P1, P2 über eine Schaltereinheit 6 an einer Spannungsquelle 3 angeschlossen. Die Sekundärwicklung S1 ist ihrerseits an einen elektrischen Verbraucher 4 angeschlossen.

Beide Primärwicklungen P1, P2 sind auf den primärseitigen Nennstrom I_{N}(P) ausgelegt, d.h. sie können beide einzeln an die Spannungsquelle 3 angeschlossen werden und begrenzen im Kurzschlussfall den primärseitigen Kurzschlussstrom auf einen akzeptablen Wert. Die Sekundärwicklung S1 ist auf ein Mehrfaches des sekundärseitigen Nennstromes I_{N}(S) ausgelegt, d.h. auch im Kurzschlussfall wird der sekundärseitige Kurzschlussstrom die sekundärseitige kritische Stromstärke I_{C}(S) nicht oder nur wenig überschreiten. Auf jeden Fall wird sich die Sekundärwicklung S1 höchstens so stark erwärmen, dass sie sich nach dem Wegfall des Kurzschlusses auch unter Belastung durch den sekundärseitigen Nennstrom I_{N}(S) wieder abkühlen kann.

In Fig.2 ist eine Ausführungsform dargestellt, bei welcher sekundärseitig ebenfalls zwei parallele Wicklungen S1 und S2 vorgesehen sind. Diese zwei Sekundärwicklungen sind nun auf den sekundärseitigen Nennstrom I_{N}(S) ausgelegt. Trotz der Verdoppelung der sekundärseitigen Windungszahl ist dies vorteilhaft, weil die zwei sekundärseitigen Wicklungen S1, S2 nur den sekundärseitigen Nennstrom I_{N}(S) verlustlos leiten müssen und ihr Leiterquerschnitt ein Mehrfaches kleiner ist als im vorhergehenden Beispiel. Analog zur Primärseite sind die zwei sekundärseitigen Wicklungen S1, S2 über eine Schaltereinheit 6 an den Sekundärkreis 5 mit dem elektrischen Verbraucher 4 angeschlossen. Die doppelten Primär- und Sekundärwicklungen bilden zwei Transformator-Spulenpaare oder -Paarwicklungen (P1, S1) und (P2, S2), welche als zu zwei verschiedenen Transformatoren gehörend aufgefasst werden können. Die Schaltereinheit 6 sieht für jede Transformatorwicklung jeweils einen Schalter vor, die paarweise einer Transformator-Paarwicklung zugeordnet sind.

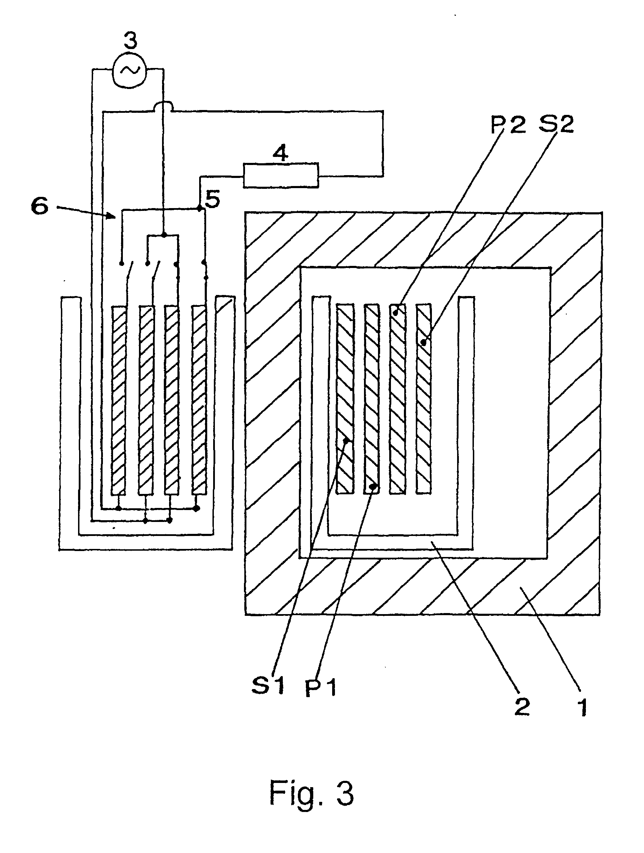

Fig 3 zeigt eine zu der in Fig.2 dargestellten Ausführungsform analoge schematische Darstellung. Sämtliche Wicklungen P1, P2, S1, S2 sind konzentrisch um den Transformatorkern 1 gewickelt und befinden sich in einem Kryostaten 2. Dieser ist zur Kühlung der supraleitenden Wicklungen mit einem Kühlmedium, im Falle von Hochtemperatursupraleitern vorzugsweise mit flüssigem Stickstoff, gefüllt.

Die Spannungsquelle 3 speist im Normalbetrieb Strom in die Primärwicklung P1 ein. Die Sekundärwicklung S1 versorgt hingegen den elektrischen Verbraucher 4 mit Strom. Im Kurzschlußfall im Sekundärkreis 5 steigt der Strom in der Primär- und Sekundärwicklung P1, S1 kurzzeitig sehr stark an, wodurch sich zumindest die PrimärSpule P1 aufgrund Überschreitens der kritischen Stromstärke I_{C}(P) erwärmt und in einen normalleitenden Zustand übertritt. Durch das Erwärmen der Primärwicklung P1 (und im zweiten Ausführungsbeispiel auch der Sekundärwicklung S1 ) über die kritische Temperatur hinaus wird der Kurzschlußstrom innerhalb der elektrischen Schaltung begrenzt. Um nach Beseitigen des Kurzschlusses die Versorgung des Verbrauchers 4 weitgehendst unterbrechungsfrei sicherzustellen, ist die Schaltereinheit 6 vorgesehen, durch die die zweite Primärwicklung P2 respektive die Primärund Sekundärseite der zweiten Transformator-Paarwicklung (P2, S2) an den elektrischen Schaltkreis angeschlossen werden. Die Schalterstellungen für die Primär- und Sekundärwicklung P1 und S1, die sich im normalleitenden Zustand befinden, werden dabei geöffnet. Nach entsprechendem Abkühlen der Primär- und Sekundärwicklungen P1 und S1 kann die Schalterstellung wieder in den Ausgangszustand zurückgesetzt werden.

Mit Hilfe der beiden Primärwicklungen bzw. der paarweisen Anordnung zweier Transformator-Paarwicklungen ist es möglich, weitgehend unterbrechungsfrei einen elektrischen Schaltkreis trotz auftretender Spitzenströme bei Kurzschlußstromfällen unter Verwendung supraleitender Transformatoren zu betreiben. Mit Hilfe der erfindungsgemäßen Anordnung kann die kurzzeitige Stromunterbrechung ausschließlich auf die Zeitspanne der effektiven Dauer des Auftretens von Überlastströmen begrenzt werden.

### Bezugszeichenliste

- 1: Transformatorkem
- 2: Kryostat
- 3: Spannungsquelle
- 4: Elektrischer Verbraucher
- 5: Sekundärkreis
- 6: Schaltereinheit
- P1, P2: Primärwicklungen
- S1, S2: Sekundärwicklungen

## Patentansprüche

1. Anordnung zur Strombegrenzung mit einer supraleitenden Transformatoranordnung in einem elektrischen Schaltkreis, mit zwei Transformator-Primärwicklungen (P1, P2), welche supraleitendes Material enthalten und mit einer Schaltereinheit (6) verschaltet sind, und einer supraleitenden Transformator-Sekundärwicklung (S1),
**dadurch gekennzeichnet, daß**
die Schaltereinheit (6) von einer kurzschlussstrombegrenzenden ersten Transformator-Primärwicklung (P1) auf eine supraleitende zweite Transformator-Primärwicklung (P2) umschaltbar ist.

2. Anordnung nach Anspruch 1,
**dadurch gekennzeichnet, daß** die supraleitenden Transformator-Primärwicklungen (P1, P2) eine im Wesentlichen gleiche kritische Stromstärke I_{C}(P) aufweisen.

3. Anordnung zur Strombegrenzung mit einer supraleitenden Transformatoranordnung in einem elektrischen Schaltkreis, mit zwei Transformator-Primärwicklungen (P1, P2) und zwei Transformator-Sekundärwicklungen (S1, S2), welche Wicklungen supraleitendes Material enthalten und mit einer Schaltereinheit (6) verschaltet sind, wobei eine erste Primärwicklung (P1) und eine erste Sekundärwicklung (S1) zusammen eine erste Transformator-Paarwicklung (P1, S1) und eine zweite Primärwicklung (P2) und eine zweite Sekundärwicklung (S2) zusammen eine zweite Transformator-Paarwicklung (P2, S2) bilden,
**dadurch gekennzeichnet, daß**
die Schaltereinheit (6) von einer kurzschlussstrombegrenzenden ersten Transformator-Paarwicklung (P1, S1) auf eine supraleitende zweite Transformator-Paarwicklung (P2, S2) umschaltbar ist.

4. Anordnung nach Anspruch 3,
**dadurch gekennzeichnet, daß** die supraleitenden Transformator-Sekundärwicklungen (S1, S2) eine im Wesentlichen gleiche kritische Stromstärke I_{C}(S) aufweisen.

5. Anordnung nach Anspruch 3,
**dadurch gekennzeichnet, daß** die Transformator-Paarwicklungen (P1, S1) und (P2, S2) um einen gemeinsamen induktiven Kern (1), vorzugsweise Eisenkern, gewickelt sind, und daß die Transformator-Paarwicklungen (P1, S1) und (P2, S2) in folgender Abfolge ausgehend vom Kern (1) um diesen gewickelt sind: erste Sekundärwicklung (S1), erste Primärwicklung (P1), zweite Primärwicklung (P2) und zweite Sekundärwicklung (S2).

6. Anordnung nach Anspruch 3,
**dadurch gekennzeichnet, daß** die Primärwicklungen (P1, P2) sowie die Sekundärwicklungen (S1, S2) einseitig miteinander elektrisch verbunden sind, und daß die Schaltereinheit (6) für jede Transformatorwicklung jeweils einen Schalter vorsieht, und dass die Schalter paarweise einer Transformator-Paarwicklung zugeordnet sind.

7. Verfahren zur Strombegrenzung mit einer supraleitenden Transformatoranordnung in einem elektrischen Schaltkreis unter Verwendung einer Anordnung nach einem der Ansprüche 1 oder 2, wobei im Falle eines Stromanstiegs innerhalb des elektrischen Schaltkreises die mit dem elektrischen Schaltkreis über die Schaltereinheit (6) elektrisch verbundene Transformator-Primärwicklung (P1) durch Erwärmung normalleitend wird und den Strom begrenzt,
**dadurch gekennzeichnet, daß** nach Beseitigung des Stromanstiegs die normalleitende Transformator-Primärwicklung (P1) über die Schaltereinheit (6) vom elektrischen Schaltkreis getrennt wird, nachdem die zweite, supraleitende Transformator-Primärwicklung (P2) in den elektrischen Schaltkreis zugeschaltet wird.

8. Verfahren zur Strombegrenzung mit einer supraleitenden Transformatoranordnung in einem elektrischen Schaltkreis unter Verwendung einer Anordnung nach einem der Ansprüche 3 bis 6, wobei im Falle eines Stromanstiegs innerhalb des elektrischen Schaltkreises die mit dem elektrischen Schaltkreis über die Schaltereinheit (6) elektrisch verbundene Transformator-Paarwicklung (P1, S1) durch Erwärmung normalleitend wird und den Strom begrenzt,
**dadurch gekennzeichnet, daß** nach Beseitigung des Stromanstiegs die normalleitende Transformator-Paarwicklung (P1, S1) über die Schaltereinheit (6) vom elektrischen Schaltkreis getrennt wird, nachdem die zweite, supraleitende Transformator-Paarwicklung (P2, S2) in den elektrischen Schaltkreis zugeschaltet wird.

9. Verfahren nach Anspruch 8,
**dadurch gekennzeichnet, daß** nach Abkühlen der erwärmten, normalleitend gewordene Transformator-Paarwicklung (P1, S1) und Wiedererreichen ihres supraleitenden Zustands die Schaltereinheit wieder in die Ausgangsverschaltung der Transformator-Paarwicklungen zurückkehrt.

## Claims

1. An arrangement for current limiting with a superconducting transformer arrangement in an electrical circuit, with two transformer primary windings (P1, P2) which contain superconducting material and are connected up to a switch unit (6), and with a superconducting transformer secondary winding (S1),
**characterized in that**
the switch unit (6) can be changed over from a short-circuit-current-limiting first transformer primary winding (P1) to a superconducting second transformer primary winding (P2).

2. The arrangement as claimed in claim 1,
**characterized in that** the superconducting transformer primary windings (P1, P2) have an essentially identical critical current intensity I_{C}(P).

3. An arrangement for current limiting with a superconducting transformer arrangement in an electrical circuit, with two transformer primary windings (P1, P2) and two transformer secondary windings (S1, S2) which windings contain superconducting material and are connected up to a switch unit (6), and wherein a first primary winding (P1) and a first secondary winding (S1) together form a first transformer pair winding (P1, S1) and a second primary winding (P2) and a second secondary winding (S2) together form a second transformer pair winding (P2, S2),
**characterized in that**
the switch unit (6) can be changed over from a short-circuit-current-limiting first transformer pair winding (P1, S1) to a superconducting second transformer pair winding (P2, S2).

4. The arrangement as claimed in claim 3,
**characterized in that** the superconducting transformer secondary windings (S1, S2) have an essentially identical critical current intensity I_{C}(S).

5. The arrangement as claimed in claim 3,
**characterized in that** the transformer pair windings (P1, S1) and (P2, S2) are wound around a common inductive core (1), preferably an iron core, and **in that** the transformer pair windings (P1, S1) and (P2, S2) are wound around the core (1) in the following sequence, proceeding from said core: first secondary winding (S1), first primary winding (P1), second primary winding (P2) and second secondary winding (S2).

6. The arrangement as claimed in claim 3,
**characterized in that** the primary windings (P1, P2) and also the secondary windings (S1, S2) are electrically connected to one another at one end, and **in that** the switch unit (6) provides a respective switch for each transformer winding, and **in that** the switches are assigned in pairs to a transformer pair winding.

7. A method for current limiting with a superconducting transformer arrangement in an electrical circuit using an arrangement as claimed in either of claims 1 and 2, in which case, in the event of a current rise within the electrical circuit, the transformer primary winding (P1) which is electrically connected to the electrical circuit via the switch unit (6) becomes normally conducting as a result of heating and limits the current,
**characterized in that**, after the current rise has been eliminated, the normally conducting transformer primary winding (P1) is isolated from the electrical circuit via the switch unit (6) after the second superconducting transformer primary winding (P2) is connected into the electrical circuit.

8. A method for current limiting with a superconducting transformer arrangement in an electrical circuit using an arrangement as claimed in one of claims 3 to 6, in which case, in the event of a current rise within the electrical circuit, the transformer pair winding (P1, S1) which is electrically connected to the electrical circuit via the switch unit (6) becomes normally conducting as a result of heating and limits the current,
**characterized in that**, after the current rise has been eliminated, the normally conducting transformer pair winding (P1, S1) is isolated from the electrical circuit via the switch unit (6) after the second superconducting transformer pair winding (P2, S2) is connected into the electrical circuit.

9. The method as claimed in claim 8,
**characterized in that**, after the transformer pair winding (P1, S1) that was heated and became normally conducting has been cooled and its superconducting state has been reached again, the switch unit returns to the initial connections of the transformer pair windings.

## Revendications

1. Arrangement de limitation du courant avec un arrangement de transformateur supraconducteur dans un circuit électrique, avec deux enroulements primaires de transformateur (P1, P2) qui contiennent un matériau supraconducteur et qui sont connectés à un module de commutation (6) et un enroulement secondaire de transformateur supraconducteur (S1), **caractérisé en ce que** le module de commutation (6) peut commuter d'un premier enroulement primaire de transformateur (P1) limitant le courant de court-circuit à un deuxième enroulement primaire de transformateur (P2) supraconducteur.

2. Arrangement selon la revendication 1, **caractérisé en ce que** les enroulements primaires de transformateur (P1, P2) supraconducteurs présentent pratiquement la même intensité de courant critique I_{c}(P).

3. Arrangement de limitation du courant avec un arrangement de transformateur supraconducteur dans un circuit électrique, avec deux enroulements primaires de transformateur (P1, P2) et deux enroulements secondaires de transformateur (S1, S2) qui contiennent des enroulements en matériau supraconducteur et qui sont connectés à un module de commutation (6), un premier enroulement primaire (P1) et un premier enroulement secondaire (S1) formant ensemble un premier enroulement jumelé de transformateur (P1, S1) et un deuxième enroulement primaire (P2) et un deuxième enroulement secondaire (S2) formant ensemble un deuxième enroulement jumelé de transformateur (P2, S2), **caractérisé en ce que** le module de commutation (6) peut commuter d'un premier enroulement jumelé de transformateur (P1, S1) limitant le courant de court-circuit à un deuxième enroulement jumelé de transformateur (P2, S2) supraconducteur.

4. Arrangement selon la revendication 3, **caractérisé en ce que** les enroulements secondaires de transformateur (S1, S2) supraconducteurs présentent pratiquement la même intensité de courant critique I_{C}(S).

5. Arrangement selon la revendication 3, **caractérisé en ce que** les enroulements jumelés de transformateur (P1, S1) et (P2, S2) sont enroulés autour d'un noyau inductif (1) commun, de préférence un noyau en fer, et **en ce que** les enroulements jumelés de transformateur (P1, S1) et (P2, S2) sont enroulés autour du noyau (1) dans l'ordre suivant à partir de celui-ci : premier enroulement secondaire (S1), premier enroulement primaire (P1), deuxième enroulement primaire (P2) et deuxième enroulement secondaire (S2).

6. Arrangement selon la revendication 3, **caractérisé en ce que** les enroulements primaires (P1, P2) et les enroulements secondaires (S1, S2) sont reliés électriquement ensemble d'un côté et que le module de commutation (6) prévoit à chaque fois un commutateur pour chaque transformateur et que les commutateurs sont associés par paires à un enroulement jumelé de transformateur.

7. Procédé de limitation du courant avec un arrangement de transformateur supraconducteur dans un circuit électrique selon l'une des revendications 1 ou 2, avec lequel, en cas d'augmentation du courant à l'intérieur du circuit électrique, l'enroulement primaire de transformateur (P1) relié électriquement au circuit électrique par le biais du module de commutation (6) devient normalement conducteur par échauffement et limite le courant, **caractérisé en ce qu'**après élimination de l'augmentation du courant, l'enroulement primaire de transformateur (P1) à conduction normale est déconnecté du circuit électrique par le module de commutation (6) après que le deuxième enroulement primaire de transformateur (P2) supraconducteur ait été connecté au circuit électrique.

8. Procédé de limitation du courant avec un arrangement de transformateur supraconducteur dans un circuit électrique selon l'une des revendications 3 à 6, avec lequel, en cas d'augmentation du courant à l'intérieur du circuit électrique, l'enroulement jumelé de transformateur (P1, S1) relié électriquement au circuit électrique par le biais du module de commutation (6) devient normalement conducteur par échauffement et limite le courant, **caractérisé en ce qu'après** élimination de l'augmentation du courant, l'enroulement jumelé de transformateur (P1, S1) à conduction normale est déconnecté du circuit électrique par le module de commutation (6) après que le deuxième enroulement jumelé de transformateur (P2, S2) supraconducteur ait été connecté au circuit électrique.

9. Procédé selon la revendication 8, **caractérisé en ce que** le module de commutation ramène les enroulements jumelés de transformateur dans leur position de commutation initiale après que l'enroulement jumelé de transformateur (P1, S1) échauffé et devenu normalement conducteur se soit refroidi et ait retrouvé son état supraconducteur.
